(19) **Europäisches Patentamt / European Patent Office / Office européen des brevets**

(11) **EP 3 476 071 B1**

(12) **FASCICULE DE BREVET EUROPEEN**

(45) Date de publication et mention de la délivrance du brevet:
**16.12.2020 Bulletin 2020/51**

(21) Numéro de dépôt: **17737342.0**

(22) Date de dépôt: **22.06.2017**

(51) Int Cl.:
*H04L 1/18* (2006.01)     *H04L 1/00* (2006.01)

(86) Numéro de dépôt international:
**PCT/FR2017/051660**

(87) Numéro de publication internationale:
**WO 2017/220938 (28.12.2017 Gazette 2017/52)**

(54) **TRANSMISSION DYNAMIQUE ET SELECTIF D'UN SIGNAL NUMERIQUE POUR UN SYSTEME AVEC RELAIS FULL-DUPLEX ET UNE VOIE DE RETOUR LIMITEE**

DYNAMISCHE UND SELEKTIVE ÜBERTRAGUNG EINES DIGITALEN SIGNALS FÜR EIN SYSTEM MIT VOLLDUPLEX-RELAIS UND EINEM BEGRENZTEN RÜCKWEG

DYNAMIC AND SELECTIVE TRANSMISSION OF A DIGITAL SIGNAL FOR A SYSTEM WITH FULL-DUPLEX RELAY AND A LIMITED RETURN PATH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.06.2016 FR 1655889**

(43) Date de publication de la demande:
**01.05.2019 Bulletin 2019/18**

(73) Titulaire: **ORANGE**
**75015 Paris (FR)**

(72) Inventeurs:
• **MOHAMAD, Abdulaziz**
**92260 Fontenay aux Roses (FR)**
• **VISOZ, Raphaël**
**92170 Vanves (FR)**
• **BERTHET, Antoine**
**92290 Chatenay Malabry (FR)**

(56) Documents cités:
**US-A1- 2006 291 440**

• **HENRI DUBOIS-FERRIÈRE ET AL: "Packet combining in sensor networks", PROCEEDINGS OF THE 3RD INTERNATIONAL CONFERENCE ON EMBEDDED NETWORKED SENSOR SYSTEMS , SENSYS '05, 1 janvier 2005 (2005-01-01), page 102, XP055121035, New York, New York, USA DOI: 10.1145/1098918.1098930 ISBN: 978-1-59-593054-5**

EP 3 476 071 B1

**Description**

**Domaine de l'invention**

De manière générale, la présente invention concerne le domaine des communications numériques. Plus précisément, le domaine de l'invention est celui de la transmission de données codées dans un réseau MARC (Multiple-Access Relay Channel) ou MAMRC (Multiple-Access Multiple Relay Channel). Un réseau MAMRC est un système de télécommunication qui, pour une destination donnée, comprend au moins quatre nœuds : au moins deux émetteurs et deux relais. Plus précisément, l'invention se rapporte au relayage et elle concerne l'amélioration de la qualité de la transmission des données, et en particulier l'amélioration des performances du décodage correcteur d'erreurs dans un récepteur (destination). Le relayage est mis en œuvre par un relais qui coopère avec les sources pour obtenir une communication plus fiable entre les sources et la destination. On distingue deux types de fonctionnement pour le relais : le mode half-duplex et le mode full-duplex.

L'invention s'applique notamment, mais non exclusivement, à la transmission de données via des réseaux mobiles par exemple pour des applications temps réel ou via des réseaux de capteurs par exemple pour des remontées de mesures. Elle s'applique aux relais dits *« Full Duplex »* (FD) avec des liens entre les relais et la destination qui sont non orthogonaux (avec interférences). Dans la demande le lien est le canal de communication entre deux ou plusieurs nœuds, il peut être physique ou logique. Lorsque le lien est physique alors il est généralement appelé canal.

**Art antérieur**

Les réseaux, en particulier mobiles, sont à la recherche de gains significatifs en termes de capacité, de fiabilité, de consommation et autres. Le canal de transmission d'un réseau mobile est réputé difficile et conduit à une fiabilité de transmission relativement médiocre. Des progrès importants ont été réalisés ces dernières années, en matière de codage et de modulation, notamment pour des considérations de consommation et de capacité. En effet, dans un réseau mobile où plusieurs émetteurs/récepteurs partagent les mêmes ressources (temps, fréquence et espace) il faut réduire au maximum la puissance d'émission.

Cette réduction va à l'encontre de la couverture et donc de la capacité du système et plus généralement de ses performances.

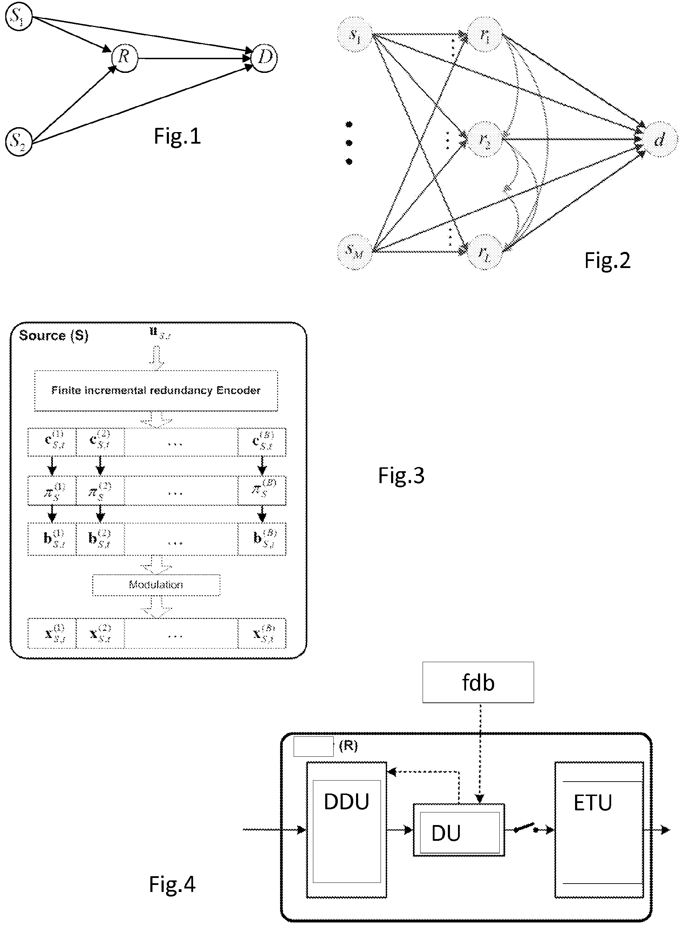

Pour augmenter la couverture, fiabiliser les communications et plus généralement améliorer les performances, une approche consiste à s'appuyer sur des relais pour augmenter l'efficacité spectrale (*gain de codage*) et donc améliorer l'efficacité de transmission et la fiabilité des systèmes (*gain de diversité*). La topologie de base des systèmes MARC illustrée par la figure 1 est telle que les sources, nœuds $S_1$ et $S_2$, diffusent leurs séquences d'informations codées à l'attention du relais R et du destinataire D. Le relais décode les signaux reçus issus des sources $S_1$ et $S_2$ et ré-encode conjointement ceux-ci en ajoutant une redondance propre créant un code de réseau spatialement distribué vu du récepteur D. A la destination D, le décodage des trois séquences codées spatialement distribuées, comprenant les deux séquences codées reçues issues directement des sources S1 et S2 et la séquence codée issue du relais, repose sur un algorithme de décodage conjoint d'un codage canal et d'un codage réseau dit décodage conjoint canal et réseau.

Le codage de réseau est une forme de coopération selon laquelle les nœuds du réseau partagent non seulement leurs ressources propres (puissance, bande, etc.) mais également leur capacité de calcul, pour créer un codage distribué de plus en plus puissant au fur et à mesure que l'information se propage à travers les nœuds. Il amène des gains substantiels en termes de diversité et de codage et donc de fiabilité de transmission.

Selon le mode full-duplex, le relais reçoit les nouveaux blocs d'information de la part des deux sources et transmet simultanément au destinataire une information basée sur les blocs reçus précédemment ; le relais peut donc recevoir et émettre simultanément sur une même bande fréquentielle ou sur des bandes différentes. Comparativement au relais half-duplex, le relais full-duplex permet d'atteindre une capacité plus grande.

US 2006/291440 décrit un relais pour un système MAMRC (Multiple Access Multiple Relay Channel) sans voie de retour depuis la destination.

Henri Dubois-Ferrière et al : « Packet combining in sensor networks », Proc. of the 3rd international conference on embedded networked sensor systems, SENSYS 05, 1 janvier 2005 (2005-01-01), page 102, décrit un schéma de correction d'erreur par recombinaison de paquets dans un réseau sans fil multi sauts avec un mécanisme de retransmission basé sur un ACK.

La demande de brevet WO 2015197990 porte sur un système MARC selon lequel les sources émettent T messages dans des intervalles t de temps consécutifs. Chaque message est codé et chaque mot de code est composé de B blocs transmis dans des sous intervalles de temps successifs. L'accumulation des blocs de 1 à b est un mot de code d'un code dont le rendement diminue avec b, $1 \le b \le B$. Le système met en œuvre un protocole de relayage qui transmet uniquement des mots décodés sans erreur selon une technique dite D-SDF (Dynamic Selective Decode and Forward). La détection d'erreur au relais est basée sur une vérification du CRC (abréviation de Cyclic Redundancy Check) inclus dans les messages sources. Le caractère dynamique vient d'un schéma de sélection qui pilote le choix des mots décodés sans erreur qui participent au codage réseau avant émission par le relais. Par ailleurs, chaque relais inclus dans sa transmission un signal de contrôle indiquant à la destination et aux autres relais, les messages des sources avec lesquels il coopère.

Ce protocole permet de contribuer à une augmentation de la probabilité à décoder correctement les messages reçus par le destinataire en ayant un schéma de sélection qui utilise à un intervalle courant de transmission des messages décodés sans erreur lors d'un intervalle précédent.

**Caractéristiques principales de l'invention**

L'invention se rapporte à la transmission d'un signal numérique dans un réseau à au moins quatre nœuds comprenant deux émetteurs, au moins un relais et un destinataire permettant d'améliorer l'efficacité énergétique et spectrale de la transmission lorsque le relais est full duplex, qui peut donc recevoir et transmettre simultanément, tout en limitant la complexité de décodage au relais et à la destination.

L'invention a pour objet un procédé de relayage de messages mis en œuvre par un système de télécommunication comprenant M sources, L relais relais full-duplex et une destination, M>1, L≥1, le procédé comprenant par relais et pour un cycle courant de transmission de $T$ intervalles de transmission, T un naturel, $T > 1$ :

- décodage pour estimer un message par source à partir de blocs successifs reçus émis pendant un intervalle $t$ courant de transmission par une source $S$ correspondant à un mot de code $\mathbf{c}_{S,t}$ comprenant $B$ blocs $\mathbf{c}_{S,t}^{(1)}$, $\mathbf{c}_{S,t}^{(2)}$, ... $\mathbf{c}_{S,t}^{(b)}$ ..., $\mathbf{c}_{S,t}^{(B)}$ dont le premier peut être décodé de manière indépendante des autres blocs, un mot de code $\mathbf{c}_{S,t}$ codant un message $\mathbf{u}_{S,t}$ de K bits, les sources émettant simultanément, avec K et $B$ des naturels, $B > 2$, $1 \leq t \leq T$,
- détection d'erreur sur les messages estimés et décision des messages source $\mathbf{u}_{S,t}$ décodés sans erreur, à chaque estimation d'un message suite à un bloc reçu d'une source,
- codage réseau d'une sélection des messages décodés sans erreur,
- transmission vers la destination d'un signal représentatif des messages codés réseau et d'un signal de contrôle indiquant les messages sélectionnés

$$( \mathcal{S}_{R,t,b-1} \backslash \mathcal{S}_{D,t,b-1}),$$

- après chaque réception d'un bloc des différentes sources $S$, le relais ne transmet pas pendant une période de temps nécessaire pour réceptionner et décoder une voie de retour provenant de la destination indiquant un décodage correct ou pas d'un ou de plusieurs messages,
- le relais sélectionne les messages à coder parmi les messages décodés sans erreur par le relais en prenant en compte uniquement la voie de retour.

L'invention a en outre pour objet un relais full-duplex destiné à un système de télécommunication comprenant M sources, L relais et une destination, M>1, L≥1, pour un cycle courant de transmission de $T$ intervalles de transmission, T un naturel, $T > 1$, comprenant :

- un décodeur pour estimer un message par source, à partir de blocs successifs reçus émis pendant un intervalle $t$ courant de transmission par une source S correspondant à un mot de code $\mathbf{c}_{S,t}$ comprenant $B$ blocs $\mathbf{c}_{S,t}^{(1)}$, $\mathbf{c}_{S,t}^{(2)}$, ... $\mathbf{c}_{S,t}^{(b)}$ ..., $\mathbf{c}_{S,t}^{(B)}$ dont le premier peut être décodé de manière indépendante des autres blocs, un mot de code $\mathbf{c}_{S,t}$ codant un message $\mathbf{u}_{S,t}$ de K bits, les sources émettant simultanément, avec K et $B$ des naturels, $B > 2$, $1 \leq t \leq T$,
- un module de décision pour décider des messages source $\mathbf{u}_{S,t}$ décodés sans erreur à partir des messages estimés, à chaque estimation d'un message suite à un bloc reçu,
- un codeur réseau d'une sélection des messages décodés sans erreur et
- un émetteur d'un signal représentatif des messages codés réseau vers la destination et d'un signal de contrôle indiquant les messages sélectionnés ($S_{R,t-1}$, $S_{R,t-1} \cap \overline{S}_{D,t-1}$).

Le relais est tel que le module de décision sélectionne les messages décodés sans erreur en entrée du codeur réseau en prenant en compte uniquement une voie de retour provenant de la destination indiquant un décodage correct ou pas d'un ou plusieurs messages des sources et tel que le module de décision interdit après chaque réception par le relais d'un bloc l'émission par l'émetteur pendant une période de temps nécessaire pour réceptionner et décoder la voie de retour.

L'invention a en outre pour objet une source d'un signal numérique destiné à un système de télécommunication comprenant M sources, L relais et une destination, M>1, L≥1, comprenant :

- un codeur de messages $\mathbf{u}_{S,t}$ de K bits comprenant un CRC en des mots de code $\mathbf{c}_{s,t}$, de type à redondance incrémentale finie pour délivrer à chaque sous intervalle de transmission $b$ = 1,2,...,$B$ d'un intervalle courant $t$ de transmission d'un cycle courant de transmission de $T$ intervalles de transmission, T un naturel, $T > 1$, un bloc $\mathbf{c}_{S,t}^{(b)}$ tel que les $B$ blocs successifs $\{c_{S,t}^{(b)}: 1 \leq b \leq B\}$ forment le mot de code $\mathbf{c}_{s,t}$, tel que le premier bloc peut être décodé de manière indépendante des autres blocs et tel que les blocs suivants sont des bits de parité qui ajoutent une redondance au premier bloc, avec K et $B$ des naturels, $B > 2$, $1 \leq t \leq T$,
- un émetteur des blocs d'un mot de code $\mathbf{c}_{s,t}$ pendant l'intervalle courant $t$ de transmission à destination des relais et de la destination,
- un contrôleur de l'émetteur,
- un récepteur d'une voie de retour provenant de la destination indiquant un décodage correct ou pas des messages des sources tel que l'émetteur stoppe l'émission des blocs du mot de code $\mathbf{c}_{s,t}$ lorsque la voie de retour indique un décodage correcte du message $\mathbf{u}_{S,t}$ de la source $S$.

La source est telle qu'après chaque émission par l'émetteur d'un bloc, le contrôleur interdit toute émission par l'émetteur pendant une période de temps nécessaire pour réceptionner et décoder la voie de retour.

Ainsi, le relais fait partie d'un système MARC (Multiple-Access Relay Channel) ou MAMRC (Multiple-Access Multiple Relays Channel) qui comprend au moins deux sources, le relais et la destination. Le système peut comprendre plus de deux sources et plusieurs relais.

Les sources émettent simultanément à destination d'une même destination ce qui permet d'utiliser au maximum la ressource spectrale commune. Les sources émettent $T$ messages dans des intervalles t de transmission consécutifs mais qui peuvent être de durée variable.

Le procédé de relayage est tel que le codage aux sources est de type à redondance incrémentale finie et délivre à chaque sous intervalle de transmission $b$ = 1,2,...,$B$ d'un intervalle $t$ courant de transmission un bloc $\mathbf{c}_{S,t}^{(b)}$ tel que les $B$ blocs successifs $\{c_{S,t}^{(b)}: 1 \leq b \leq B\}$ forment le mot de code $\mathbf{c}_{s,t}$, tel que le premier bloc peut être décodé de manière indépendante des autres blocs et tel que les blocs suivants sont des bits de parité qui ajoutent une redondance au premier bloc.

Le relais estime les messages reçus provenant des sources et codent uniquement certains des messages détectés sans erreur sous la forme d'un signal représentatif.

Le relais étant full-duplex, il peut simultanément écouter une voie de retour provenant de la destination et transmettre. Si la destination décode correctement le message d'une source, elle remonte via une voie de retour une indication que le message de la source $i$ est correctement décodé ou pas. Pour assurer la causalité du procédé, la voie de retour est multiplexée en temps avec les transmissions des sources et du relais. A partir du retour de la destination, le relais peut déduire le jeu des messages correctement décodés par la destination et adapter sa sélection pour le sous-intervalle suivant à partir des messages qu'il a décodés sans erreur. Au sous-intervalle suivant, le relais écarte le message de la source $i$ (s'il l'a correctement décodé) de sa sélection des messages qu'il a décodés sans erreur et ce avant de coder réseau les messages de sa sélection.

Ainsi, un relais n'émet d'information que sur les messages qui ne sont pas encore décodés correctement par la destination optimisant ainsi l'utilisation du canal de transmission. Le relais collabore uniquement avec les messages restant à décoder par la destination ce qui simplifie le traitement à la réception par la destination et ce qui permet de réduire au moins la puissance consommée nécessaire au codage réseau et au décodage réseau ainsi que les interférences générées au sein du système et donc la puissance nécessaire pour lutter contre ces interférences.

Le relais peut en outre exploiter les signaux de retour pour agir en amont lors de la détection et du décodage des messages reçus des sources et écarter ceux des sources déjà décodés sans erreur par la destination.

Selon un mode de réalisation, la voie de retour consiste en des signaux de contrôle nominatifs par source.

Selon ce mode, l'indication est faite via des signaux de contrôle de type acquittement $ACK_i$ (Acknowledge). Le canal de contrôle pour la transmission des signaux $ACK_i$ est alors multiplexé en temps avec les transmissions des sources et du relais. La destination remonte ainsi un signal de contrôle $ACK_i$ à la fin de chaque sous-intervalle $b$ après réception et décodage des blocs reçus des sources avec l'aide des signaux reçus des relais. Le plus simple est que chaque signal de contrôle comprenne un identifiant de la source $i$, donc soit nominatif d'une source, et comprenne un bit mis à zéro ou à un selon que le message de cette source est décodé sans erreur ou pas par la destination.

Selon un mode de réalisation, le procédé comprend par source $S$ :

- codage en un mot de code $\mathbf{c}_{s,t}$ d'un message $\mathbf{u}_{S,t}$ de K bits comprenant un CRC, le codage étant de type à redondance incrémentale finie et délivrant un bloc $\mathbf{c}_{S,t}^{(b)}$ à chaque sous-intervalle $b$ de transmission de l'intervalle $t$ courant de transmission, $1 \leq b \leq B$, tel que les B blocs successifs $\mathbf{c}_{S,t}^{(1)}$, $\mathbf{c}_{S,t}^{(2)}$, ... $\mathbf{c}_{S,t}^{(b)}$ ..., $\mathbf{c}_{S,t}^{(B)}$ forment le mot de code $\mathbf{c}_{s,t}$, tel que le premier bloc peut être décodé de manière indépendante des autres blocs et tel que les blocs suivants sont des bits de parité qui ajoutent une redondance au premier bloc,

- émission après modulation des blocs $\mathbf{c}_{S,t}^{(b)}$ pendant les B sous-intervalles de transmission à destination du relais et de la destination.

Selon ce mode de réalisation, la détection par le relais de messages décodés sans erreurs peut être effectuée au moyen d'un code de type CRC inclus dans les messages $\mathbf{u}_{S,t}$ de K bits émis par les sources.

Selon un mode de réalisation, après chaque émission d'un bloc, une source $S$ ne transmet pas pendant une période de temps nécessaire pour réceptionner et décoder la voie de retour provenant de la destination indiquant un décodage correct ou pas d'un ou de plusieurs messages des sources et dans lequel la source stoppe l'émission des blocs si son message $\mathbf{u}_{S,t}$ est indiqué correctement décodé.

Ainsi, chaque source tient compte de la voie de retour pour stopper son émission des blocs d'un message si cette voie de retour comprend l'identification du message de cette source. La source arrête donc de transmettre le message et optimise ainsi son occupation du canal en transmission. Pour assurer la causalité du procédé de relayage, chacune des sources est silencieuse après chaque émission d'un bloc et pendant un temps suffisant pour recevoir un retour de la destination et le décoder.

Selon un mode de réalisation, la source passe à l'intervalle de transmission suivant l'intervalle t courant de transmission du cycle courant de transmission ou passe à un cycle suivant le cycle courant de transmission si l'intervalle t courant est égale à $T$ ou si tous les messages ont été correctement décodés par la destination.

Selon ce mode, la source passe à l'intervalle de transmission suivant l'intervalle courant de transmission du cycle courant i.e. la source vide ses mémoires de données d'entrée à transmettre et prend en compte de nouvelles données d'entrée.

Toutefois si l'intervalle t courant est égale à $T$ ou si tous les messages ont été correctement décodés par la destination alors la source peut passer à un cycle suivant le cycle courant de transmission.

Chaque relais qui constate que tous les messages d'un cycle de transmission ont été décodés sans erreur par la destination ou qui constate que le sous intervalle de transmission du dernier bloc du dernier message a été atteint peut vider ses mémoires et se préparer à recevoir les messages du cycle suivant de transmission.

Le codage aux relais qui comprend un codage réseau permet de faire bénéficier à l'ensemble des sources dispersées du gain de codage d'un code réseau spatialement distribué sans diminuer l'efficacité spectrale. Ceci permet de mettre en œuvre dans le récepteur du destinataire un décodage itératif qui s'appuie sur les redondances générées dans les relais sans nécessiter d'augmenter la puissance dans les émetteurs des sources pour atteindre une augmentation de la couverture du système et de l'efficacité spectrale.

Le protocole de transmission évite la propagation d'erreur de transmission introduite plus particulièrement lorsque les liens sources vers relais sont peu fiables en ne transmettant pas les messages détectés avec erreur. L'entrelacement des messages détectés sans erreur est une technique connue nécessaire pour réaliser conjointement le décodage canal des signaux des sources et du signal du relais à la destination lorsqu'ils utilisent les mêmes ressources radio.

Le protocole de transmission contribue à une réduction de la consommation d'énergie en luttant contre la propagation d'erreur et en luttant efficacement contre les interférences (quand il coopère le relais transmets toujours une information utile à la destination).

Le protocole permet d'atteindre une efficacité maximale en limitant les messages participant au codage réseau d'un relais à ceux qui n'ont pas encore été correctement décodés par la destination. La capacité de codage du relais est ainsi ajustée au strict nécessaire à chaque sous intervalle en fonction du retour de la destination et le lien entre le relais et la destination n'est pas encombré par des informations déjà connues de la destination.

L'émission simultanée par les sources peut intervenir sur une même ressource radio (code ou fréquence) ce qui permet d'utiliser au maximum la ressource spectrale commune ; les liens sources relais sont dans ce cas non orthogonaux. Il y a donc interférence entre les signaux reçus par les relais et entre les signaux reçus par la destination du fait de la superposition des signaux sources lors de la transmission d'une part entre les sources et le relais et d'autre part entre les sources et la destination (le récepteur).

Selon un mode de réalisation, les sources émettent simultanément sur une même ressource radio, l'étape de décodage au relais est itérative et comprend une détection conjointe et un décodage conjoint. La détection et le décodage conjoints dans le relais permettent de séparer les flux émis simultanément par les deux émetteurs.

Dans le cas où les sources émettent simultanément mais sur des ressources spectrales différentes, l'étape de détection et de décodage conjoint itératif des sources n'est pas nécessaire au relais. Dans ce cas, le relais peut décoder chaque message des sources à partir de séquences reçues sans interférence entre les sources. Les liens sources relais d'une part et source destination d'autre part sont dans ce cas orthogonaux en fréquence ou en code.

Selon un mode de mise en œuvre le système comprend plusieurs relais, on parle alors de système MAMRC.

Un système MAMRC peut être tel que les relais ne s'écoute pas les uns les autres.

Selon une mise en œuvre particulièrement simple, les relais n'interfèrent pas entre eux en transmettant sur des ressources radio différentes. Cette mise en œuvre intervient plus particulièrement lorsque l'accès au canal est de type FDMA ; les sources accèdent au canal sur une bande de fréquence commune et chaque relais accède au canal sur une bande de fréquence spécifique à chaque relais. Eventuellement un des relais utilise la même bande que les sources. Cette mise en œuvre implique que pour récupérer une diversité d'ordre L+1 avec L relais et M sources, les relais mettent en œuvre un codage de réseau dans un corps de Galois dont la cardinalité est supérieure à deux dès que L>1. L'utilisation non optimale de la ressource radio conduit à un protocole simple, à une modification légère du relais par rapport à un relais full-duplex adapté à un système MARC (avec un seul relais) et à une augmentation des informations utiles pouvant être exploitées par la destination au prix cependant d'un décodage réseau à la destination un peu plus complexe que dans celui d'un système MARC.

Les ressources spectrales utilisées par les relais peuvent être différentes de celles utilisées par les sources. Plus le nombre de ressources spectrales différentes utilisées est important par rapport au nombre de sources et de relais, plus la détection est simple au niveau de la destination : la destination doit résoudre moins de collisions. Par contre, l'augmentation du nombre de ressources spectrales différentes utilisées diminue l'efficacité spectrale du système. La description d'exemples de réalisation s'attache à traiter le cas où l'efficacité spectrale est maximisée, les autres cas se déduisant par simplification des récepteurs soit au niveau du relais soit au niveau de la destination (ou les deux).

Un relais qui écoute un ou plusieurs relais en plus des sources réceptionne les signaux comme le fait la destination dans un système MARC. C'est-à-dire qu'il détecte et décode simultanément les messages des sources et les informations transmises par les autres relais représentatives de messages des sources décodés sans erreur par ces autres relais. Cette mise en œuvre conduit à une utilisation optimale de la ressource radio et du codage réseau au prix toutefois d'une augmentation de complexité des relais et de la destination. Au même instant un seul ou plusieurs relais peuvent être actifs.

Les relais peuvent tout aussi bien être des relais fixes que des relais mobiles. Compte tenu de la densité de communications à transmettre dans des zones fortement peuplées, le nombre de relais peut être important et très supérieur à deux. En effet, pour couvrir de telles zones, des relais fixes peuvent être utilisés de préférence à des stations de base dont le coût peut être nettement supérieur. De manière alternative, des relais mobiles peuvent être utilisés. Ces relais mobiles sont typiquement des terminaux mobiles.

Selon un mode de réalisation, le procédé de relayage comprend un entrelacement par source pour laquelle un message est décodé sans erreur avant un codage réseau.

L'entrelacement en entrée du codage réseau permet d'avoir à la destination une structure similaire à une concaténation parallèle (similaire à un turbo-code distribué). En fonction du type de décodage réseau à la destination les entrelacements peuvent être distincts ou pas entre les sources.

Selon un mode de réalisation, le codage réseau est suivi d'un premier entrelacement, d'un codage canal et d'un deuxième entrelacement distinct du premier.

Le deuxième entrelacement permet d'attribuer une certaine signature au signal transmis par le relais qui permet de le distinguer à la destination des signaux transmis simultanément par les sources ou par un autre relais.

Après séparation à la destination du signal transmis par le relais, le premier entrelacement éventuellement variable en fonction du bloc permet une séparation (au sens de l'indépendance statistique) entre le codage réseau et le codage canal.

Selon une implémentation préférée, les étapes du procédé de relayage sont déterminées par les instructions d'un programme de relayage incorporé dans un ou plusieurs circuits électronique telles des puces elle-même pouvant être disposées dans des dispositifs électroniques du système MARC ou MAMRC. Le procédé de relayage selon l'invention peut tout aussi bien être mis en œuvre lorsque ce programme est chargé dans un organe de calcul tel un processeur ou équivalent dont le fonctionnement est alors commandé par l'exécution du programme.

En conséquence, l'invention s'applique également à un programme d'ordinateur, notamment un programme d'ordinateur sur ou dans un support d'informations, adapté à mettre en œuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

Alternativement, le support d'informations peut être un circuit intégré dans lequel le programme est incorporé, le circuit étant adapté pour exécuter ou pour être utilisé dans l'exécution du procédé en question.

D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.

L'invention a donc en outre pour objet un programme d'ordinateur sur un support d'informations comportant des instructions de programme adaptées à la mise en œuvre d'un procédé de relayage d'un signal numérique selon l'invention, lorsque ledit programme est chargé et exécuté dans un relais destiné à un système MARC ou MAMRC destiné à mettre en œuvre le procédé de relayage.

Et l'invention a en outre pour objet un support d'informations comportant des instructions de programme adaptées à la mise en œuvre d'un procédé de relayage d'un signal numérique selon l'invention, lorsque ledit programme est chargé et exécuté dans un relais destiné à un système MARC ou MAMRC destiné à mettre en œuvre le procédé de relayage.

## Liste des figures

D'autres caractéristiques et avantages de l'invention apparaîtront plus clairement à la lecture de la description suivante de modes de réalisation, donnés à titre de simple exemples illustratifs et non limitatifs, et des dessins annexés, parmi lesquels :

- la figure 1 est un schéma illustrant la topologie de base d'un système MARC à deux sources $S_1, S_2$, un relais $R$ et une destination $D$,
- la figure 2 est un schéma illustrant la topologie de base d'un système MAMRC à M sources $S_1, ..., S_M$, L relais $\{R_1, R_2, ..., R_L\}$ et une destination $D$,
- la figure 3 est un schéma d'un mode de réalisation des étapes du procédé de relayage mises en œuvre par une source $S$ selon l'invention,
- la figure 4 est un schéma d'un mode de réalisation d'un relais selon l'invention,
- la figure 5 est un schéma du multiplexage en temps entre d'une part les transmissions des sources et des relais et d'autre part la voie de retour,
- la figure 6 est un organigramme du procédé selon l'invention mis en œuvre par le relais $R$,
- la figure 7 est un schéma d'un exemple de réalisation d'une source $S$ selon l'invention,
- la figure 8 est un schéma d'un exemple de réalisation d'un relais $R$ selon l'invention,
- la figure 9 est un schéma d'un exemple de réalisation d'un dispositif destinataire $D$ selon l'invention.

## Description de modes de réalisation particuliers

Le contexte de l'invention est celui où plusieurs sources (émetteurs) $S_1, ..., S_M$ veulent envoyer leurs messages respectifs à une destination commune D avec l'aide d'au moins un relais $\{R_1, R_2, ..., R_L\}$ full duplex comme illustré par la figure 2. Lorsqu'il y a plusieurs relais, chacun peut exploiter le signal émis par les autres relais.

Il n'y a aucune contrainte sur le canal de transmission ; il peut être à évanouissement rapide (fast fading) ou lent (slow fading), il peut être sélectif en fréquence, et il peut être MIMO. Dans la suite de la description, les nœuds (sources, relais et destination) sont supposées parfaitement synchronisés et les sources sont indépendantes (il n'y a pas de corrélation entre elles).

Un cycle de transmission est décomposé en T intervalles de transmission (time slots). La durée d'un cycle dépend du paramétrage du système et en particulier de la couche MAC selon le découpage en sept couches de l'OSI. A chaque intervalle de transmission, chaque source a un message de K bits à transmettre. Une information de type CRC fait partie du message de K bits transmis par une source et est utilisée pour déterminer si un message reçu est correctement décodé. Les $T$ messages d'une source peuvent être indépendants entre eux ou peuvent être corrélés et former une trame.

Les sources émettent simultanément. Le relais tente de transmettre à la destination un signal utile représentatif des messages estimés et décodés sans erreur pour aider les communications entre les sources et la destination. Le relais coopère avec les sources en exploitant éventuellement les signaux transmis par les autres relais du système actifs simultanément avec le relais.

$\mathbb{F}_2$ est le corps de Galois à deux éléments, $\mathbb{R}$ est le corps des réels et $\mathbb{C}$ est le corps des complexes.

La figure 3 est un schéma d'un mode de réalisation des étapes du procédé de relayage selon l'invention mises en œuvre par la source.

A chaque intervalle de transmission $t$, $t=1,...,T$, chaque source $S$ parmi les M sources $\{S_1,S_2,...,S_M\}$ a un message $\mathbf{u}_{S,t}$ comportant K bits d'information à transmettre,

$$\mathbf{u}_{S,t} \in \mathbb{F}_2^K.$$

Le message $\mathbf{u}_{S,t}$ comprend un code de type CRC qui permet de vérifier l'intégrité du message $\mathbf{u}_{S,t}$.

Les sources $\{S_1,S_2,...,S_M\}$ statistiquement indépendantes effectuent un codage du message $\mathbf{u}_{S,t}$ au moyen d'un code à redondance incrémentale et transforment le message $\mathbf{u}_{S,t}$ en $n_S$ bits notés

$$\mathbf{c}_{s,t} \in \mathbb{F}_2^{n_S}.$$

Le mot $\mathbf{c}_{s,t}$ de code obtenu est segmenté en $B$ blocs de redondance, chacun transmis pendant un sous intervalle, notés

$$\mathbf{c}_{S,t}^{(b)} \in \mathbb{F}_2^{n_{S,b}}$$

avec $b = 1,2,...,B$. Chaque bloc comprend $n_{S,b}$ bits, $n_S = \sum_{b=1}^{B} n_{S,b}$. Le code à redondance incrémentale peut être de type systématique, les bits d'information sont alors inclus dans le premier bloc : $\mathbf{u}_{S,t} \in \mathbf{c}_{S,t}^{(1)}$. Que le code à redondance incrémentale soit ou pas de type systématique, il est tel que le premier bloc $c_{S,t}^{(1)}$ parmi les $B$ blocs peut être décodé de manière indépendante des autres blocs. Le rendement de codage le plus élevé à la source $S$ est $K/n_{S,1}$ et il ne peut pas être plus grand que un, $n_{S,1} > K$. Le rendement de codage minimum pour une source $S$ est $K/n_S$. Chaque bloc $\{c_{S,t}^{(b)}: 1 < b \leq B\}$ après le premier bloc comprend des bits de parité qui ajoutent une redondance au premier bloc, chacun des blocs $\{c_{S,t}^{(b)}: 1 < b \leq B\}$ peut être décodé conjointement avec le premier bloc.

Le code à redondance incrémentale peut être réalisé par exemple au moyen d'une famille finie de codes linéaires poinçonnés à rendements compatibles ou de codes sans rendement modifiés pour fonctionner avec des longueurs finies : code raptor (RC), turbo code poinçonné de rendement compatible (rate compatible punctured turbo code, RCPTC), code convolutionnel poinçonné de rendement compatible (rate compatible punctured convolutional code, RCPCC), LDPC de rendement compatible (rate compatible low density check code, RCLDPC).

Chaque bloc $\mathbf{c}_{S,t}^{(b)}$ est entrelacé par un entrelaceur distinct noté $\pi_S^{(b)}$, le mot de code après entrelacement est noté $\mathbf{b}_{S,t}=[\mathbf{b}_{S,t}^{(1)}, \mathbf{b}_{S,t}^{(2)}, ..., \mathbf{b}_{S,t}^{(B)}]$. Les entrelaceurs permettent de lutter contre les évanouissements qui peuvent intervenir lors de la transmission par le canal et permettent de donner à chaque source une empreinte qui facilite la séparation des sources par le relais et par la destination. Chaque partie entrelacée $\mathbf{b}_{S,t}^{(b)}$ du mot de code est modulée pour obtenir un mot de code complexe $\mathbf{x}_{S,t}=[\mathbf{x}_{S,t}^{(1)}, \mathbf{x}_{S,t}^{(2)}, ..., \mathbf{x}_{S,t}^{(B)}]$ avec $\mathbf{x}_{S,t}^{(b)} \in \mathcal{X}^{N_b}$, $b = 1,2,...,B$ où $\mathcal{X} \subset \mathbb{C}$ désigne un signal complexe de cardinalité $|X| = 2^{q_S}$ et où $N_b = n_{S,b}/q_S$.

Chaque source S parmi les M sources $\{S_1,S_2,...,S_M\}$ peut utiliser un rendement minimum de codage $K/n_S$ et un ordre de modulation $q_s$ différents de ceux des autres sources dans la mesure où les nombres de sous intervalles de transmission des mots de code complexes émis sont identiques entre les sources : $n_{S,b}/q_S = N_b$, $b = 1,2,..., B$.

Chaque source S émet le mot de code $\mathbf{x}_{S,t}=[\mathbf{x}_{S,t}^{(1)}, \mathbf{x}_{S,t}^{(2)}, ..., \mathbf{x}_{S,t}^{(B)}]$ composé de B blocs pendant un intervalle de transmission qui se décompose en B sous intervalles. Quel que soit b, $1 \le b \le B$, la concaténation (ou accumulation) des blocs 1 à b est elle-même un mot de code puisque issue du codeur à redondance incrémentale.

Pour simplifier la structure de réception des relais et de la destination, les sources décrites ont des entrelaceurs, un codeur et un modulateur qui ne varient pas en fonction de l'intervalle de transmission $t, t=l,...,T$ mais qui peuvent tout aussi bien être variables.

L'invention propose une nouvelle approche de la coopération d'un relais d'un système MARC ou MAMRC pour aider les sources qui transmettent et obtenir ainsi une amélioration de l'efficacité spectrale de la transmission tout en permettant un décodage simple et efficace dans le récepteur du destinataire.

Un procédé de relayage selon l'invention est mis en œuvre par un relais full-duplex destiné à un système MARC ou MAMRC. Tout relais d'un système MAMRC peut par ailleurs exploiter le signal ou les signaux transmis par un ou plusieurs relais pour l'aider dans son estimation des messages des sources.

Ce relais selon l'invention est illustré par la figure 4. Le relais comprend un détecteur et un décodeur DDU, un module de décision DU et un codeur et un émetteur ETU.

Le détecteur et le décodeur DDU délivrent périodiquement une version estimée des messages décodés des sources au module DU. Eventuellement, le décodage conjoint de la séquence transmise par un ou plusieurs autres relais actifs facilite le décodage des messages des sources. Dans le cas d'une émission simultanée sur une même ressource radio, la détection et le décodage par le relais sont effectués de manière conjointe et itérative.

Pendant chaque intervalle de transmission $t \in \{1,...,T\}$ et pour chaque sous-intervalle $b \in \{1,...,B\}$, le relais $R$ reçoit :

$$\mathbf{y}_{R,t}^{(b)} = \sum_{i=1}^{M} h_{S_i,R,t}\mathbf{x}_{S_i,t}^{(b)} + \sum_{R_i \in \{R_1,...,R_L\}\backslash R} h_{R_i,R,t}\mathbf{x}_{R_i,t}^{(b)}\mathbf{1}_{\{J_{R_i,t}^b \neq \phi\}} + \mathbf{n}_{R,t}^{(b)}$$

avec $h_{S_i,R,t} \in \mathbb{C}$ le gain de canal entre la source $S_i$ et le relais $R$, avec $h_{R_i,R,t} \in \mathbb{C}$, le gain de canal entre le relais $R_i$ et le relais $R$, $S_i \in \{S_1,...,S_M\}$, $R \in \{R_1,...,R_L\}$, $R_i \in \{R_1,...,R_L\}\backslash R$. $\mathbf{n}_{R,t}^{(b)}$ est un vecteur de bruit additionnel de variance $\sigma^2$. $J_{R_i,t}^b$ est l'ensemble des messages des sources avec lesquels le relais Ri coopère durant le sous intervalle b, et $\mathbf{1}_{\{J_{R_i,t}^b \neq \phi\}}$ est une fonction qui indique si le relais $R_i$ coopère ou pas (émet ou est silencieux) pendant le bloc b :

$$\mathbf{1}_{\{J_{R_i,t}^b = \phi\}} = \begin{cases} 1 \ si \ J_{R_i,t}^b \neq \phi, \\ 0 \qquad sinon \end{cases}$$

avec $\phi$ l'ensemble vide.

Le décodage de la séquence des autres relais est configuré à chaque sous-intervalle $b$ de transmission selon une information de signalisation provenant de ces autres relais indiquant si chacun de ces relais coopère sur ce bloc $b$, $b = 1, ... B$ et indiquant pour quels message des sources chacun de ces relais coopère. Ainsi, le relais $R$ peut déterminer pour chaque bloc quels messages des sources sont représentées dans la séquence de chacun des autres relais et aiguiller en conséquence les séquences décodées de manière à ce qu'elles soient prises en compte lors du décodage des messages des sources représentées dans la séquence.

Le DDU utilise le bloc b courant $\mathbf{y}_{R,t}^{(b)}$ et tous les blocs précédemment reçus $\mathbf{y}_{R,t}^{(1)}$, $\mathbf{y}_{R,t}^{(2)}$, ..., $\mathbf{y}_{R,t}^{(b-1)}$ pour obtenir une estimation des messages $\hat{u}_{S_1,t},\hat{u}_{S_2,t},...,\hat{u}_{S_M,t}$ des sources. La structure et le fonctionnement du DDU sont similaires à ceux décrits dans les demandes de brevet WO 2015197990 et WO 2015197991.

Le codeur de l'ETU effectue un codage réseau des messages sélectionnés par le module DU pour générer un signal représentatif de ces messages. Ce codeur réseau est par exemple un OU exclusif des messages sélectionnés. L'émetteur de l'ETU assure la transmission du signal représentatif à la destination pendant la phase de coopération du relais. La structure et le fonctionnement de l'ETU sont similaires à ceux décrits dans les demandes de brevet WO 2015197990 et WO 2015197991.

Le module de décision DU teste le CRC des messages estimés fournis par le DDU pour déterminer les messages des sources décodés sans erreur. Il décide si le relais doit transmettre et quelle information il doit transmettre à chaque sous-intervalle pendant les $T$ intervalles de transmission.

Le module de décision DU prend en outre comme données d'entrée, la voie de retour $fdb$ provenant de la destination. Cette voie de retour indique parmi les $M$ messages des $M$ sources ceux qui ont été décodés sans erreur par la destination. A chaque sous-intervalle, la destination remonte l'indication des messages $\mathbf{u}_{S,t}$ provenant des sources $S = \{S_1,...,S_M\}$ correctement décodés ou pas.

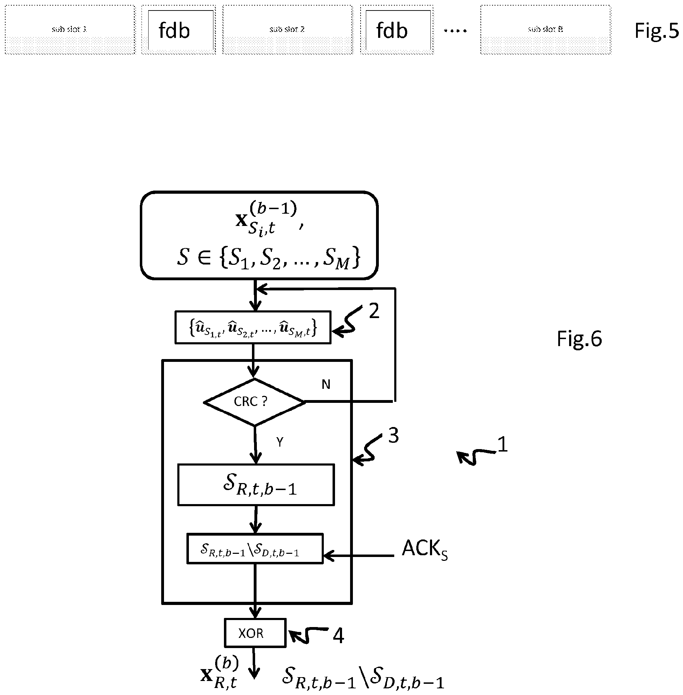

Le multiplexage en temps de la voie de retour avec la transmission des relais et des sources est illustré par le schéma de la figure 5. Ce multiplexage assure que le relais dispose de la voie de retour faisant suite au bloc $b$ reçu par la destination et par le relais pendant le sous-intervalle courant, $b$, avant de transmettre un signal pendant le sous-intervalle suivant, b + 1.

Ainsi, le module de décision DU sélectionne pour la transmission sur le sous-intervalle suivant, b + 1, parmi les messages correctement décodés par le DDU au sous-intervalle courant, b, uniquement ceux qui n'ont pas encore été décodés par la destination au sous-intervalle courant, b, c'est-à-dire que la voie de retour n'indique pas comme correctement décodés.

Lors de chaque sous-intervalle courant, b, $b$ = 1,...,$B$, de l'intervalle $t$ courant de transmission du cycle courant, la destination tente de détecter les messages de chaque source et des relais puis tente de décoder les messages qu'elle n'a pas encore correctement décodés.

La séquence reçue par la destination $D$ pendant le sous-intervalle $b \in \{1,2,...,B\}$ de l'intervalle de transmission $t \in \{1,...,T\}$ est la suivante :

$$\mathbf{y}_{D,t}^{(b)} = \sum_{i=1}^{M} h_{S_i,D,t}\mathbf{x}_{S_i,t}^{(b)} + \sum_{i=1}^{L} h_{R_i,D,t}\mathbf{x}_{R_i,t}^{(b)}\mathbf{1}_{\left\{J_{R_i,t}^b \neq \phi\right\}} + \mathbf{n}_{D,t}^{(b)}$$

dans laquelle $h_{S_i,D,t} \in \mathbb{C}$ représente le gain de canal entre la source $S_i$, $S_i \in \{S_1,...,S_M\}$, et la destination $D$, $h_{R_i,D,t} \in \mathbb{C}$ représente le gain de canal entre le relais $R_i$, $R_i \in \{R_1,...,R_L\}$, et la destination $D$, $\mathbf{n}_{D,t}^{(b)} \in \mathbb{C}^{N_b}$ est un vecteur de bruit et $J_{R_i,t}^b$ est l'ensemble des messages des sources avec lesquels le relais Ri coopère durant le sous intervalle b avec $\mathbf{1}_{\{J_{R_i,t}^b = \phi\}}$ est un indicateur pour indiquer si le relais $R_i$ est silencieux ou pas :

$$\mathbf{1}_{\{J_{R_i,t}^b = \phi\}} = \begin{cases} 1 & si\ J_{R_i,t}^b \neq \phi \\ 0 & sinon \end{cases}$$

où $\phi$ représente l'ensemble vide.

Les messages que la destination tente de décoder appartiennent à un sous-ensemble de l'ensemble des messages possibles $P_{t,b}$ pour $t$ = 1,...,$T$ :

$$P_{t,b} = \bigcup_{s=1}^{M}\{\mathbf{u}_{S,1},...,\mathbf{u}_{S,t}\}$$

Les conditions initiales pour $P_{t,b}$ sont telles que l'ensemble des messages possibles au début du premier sous-intervalle de l'intervalle $t$, $t$ > 1, est égale à l'ensemble des messages possibles au dernier sous-intervalle de l'intervalle $t$ - 1: $t$ > 1, $b$ = 1 $\Rightarrow P_{t,initial} = P_{t,0} = P_{t-1,B}$ et l'ensemble des messages possibles au début du premier sous-intervalle de l'intervalle $t$ = 1 est vide: $t$ = 1, $b$ = 1 $\Rightarrow P_{1,initial} = P_{1,0} = \emptyset$.

Si la destination décode correctement le message de la source $S = \{S_1,...,S_M\}$ pendant le sous-intervalle $b$ de l'intervalle *t,* elle remonte le signal de contrôle ACK$_s$ pendant le temps réservé à la voie de retour *fdb* indiquant que le message de la source *S* est correctement décodé, comme illustré par la figure 5.

Le relais déduit à partir de la voie de retour l'ensemble des messages correctement décodés $\mathcal{S}_{D,t,b}$ par la destination à la fin du sous-intervalle *b.* Cet ensemble est contenu dans l'ensemble des messages possibles $P_{t,b}$ :

$$\mathcal{S}_{D,t,b} \subseteq P_{t,b}.$$

Les conditions initiales pour $\mathcal{S}_{D,t,b}$ sont telles que l'ensemble des messages correctement décodés $\mathcal{S}_{D,t,initial}$ par la destination au début du premier sous-intervalle de l'intervalle courant, *t, t* > 1, est égal à l'ensemble des messages correctement décodés $\mathcal{S}_{D,t-1,B}$ par la destination à la fin du dernier sous-intervalle de l'intervalle précédent,

$$t - 1 : t > 1, b = 1 \Rightarrow \mathcal{S}_{D,t,initial} = \mathcal{S}_{D,t,0} =$$

$$\mathcal{S}_{D,t-1,B}$$

et l'ensemble des messages correctement décodés $\mathcal{S}_{D,1,initial}$ par la destination à la fin du premier sous-intervalle du premier intervalle, *t* = 1, est vide:

$$t = 1, b = 1 \Rightarrow \mathcal{S}_{D,1,initial} =$$

$$\mathcal{S}_{D,1,0} = \emptyset.$$

Les conditions initiales pour $\mathcal{S}_{R,t,b}$ sont telles que l'ensemble des messages correctement décodés

$$\mathcal{S}_{R,1,initial} = \mathcal{S}_{R,1,0}$$

par le relais au premier sous-intervalle du premier intervalle, *t* = 1, est vide:

$$t = 1, b = 1 \Rightarrow \mathcal{S}_{R,1,initial} = \mathcal{S}_{R,1,0} = \emptyset.$$

Le relais est donc silencieux lors du premier sous-intervalle du premier intervalle de transmission.

Si le relais reçoit le signal ACK$_s$, deux cas peuvent se présenter. Soit le relais a déjà correctement décodé le message $\mathbf{u}_{S,t}$ de la source S, soit le relais ne l'a pas encore correctement décodé.

Si le relais a déjà correctement décodé ce message $\mathbf{u}_{S,t}$, ce dernier fait donc partie des messages décodés sans erreur disponibles en sortie du décodeur du DDU. Le module de décision DU écarte alors de sa sélection ce message $\mathbf{u}_{S,t}$. Le message $\mathbf{u}_{S,t}$ n'est pas transmis au codeur de l'ETU.

Si le relais n'a pas déjà correctement décodé ce message $\mathbf{u}_{S,t}$, ce dernier ne fait donc pas partie des messages décodés sans erreur disponibles en sortie du décodeur du DDU. Il ne peut par conséquent être sélectionné par le module DU. En outre selon un mode de réalisation, le relais ne tente plus d'estimer ce message $\mathbf{u}_{S,t}$.

Ainsi, au sous-intervalle courant, b, *1 ≤ b ≤ B* de l'intervalle courant, *t, 1 ≤ t ≤ T,* le relais collabore avec les messages de l'ensemble des messages correctement décodés $\mathcal{S}_{R,t,b-1}$ par le relais à la fin du sous-intervalle précédent, b - 1, de l'intervalle courant, t moins les messages de l'ensemble des messages correctement décodés $\mathcal{S}_{D,t,b-1}$ par la destination à la fin du sous-intervalle précédent, b - 1, de l'intervalle courant,

$$t : \mathcal{S}_{R,t,b-1} \backslash \mathcal{S}_{D,t,b-1}.$$

Et si l'ensemble restant est vide,

$$\mathcal{S}_{R,t,b-1}\backslash\mathcal{S}_{D,t,b-1} = \emptyset,$$

alors le relais reste silencieux car il n'a pas décodé de message qui ne soit pas encore décodé correctement par la destination.

L'avantage de coopérer avec l'ensemble restant,

$$\mathcal{S}_{R,t,b-1}\backslash\mathcal{S}_{D,t,b-1},$$

au lieu de coopérer avec l'ensemble des messages correctement décodés par le relais, $\mathcal{S}_{R,t,b-1}$, est en particulier d'aider les autres relais à décoder uniquement les messages de l'ensemble des messages restant à décoder par la destination,

$$P_{t,b}\backslash\mathcal{S}_{D,t,b},$$

puisque

$$\mathcal{S}_{D,t,b-1} \subseteq \mathcal{S}_{D,t,b}$$

(les relais s'écoutant, ils sont uniquement intéressés à acquérir des informations sur les messages restant à décoder i.e.

$$P_{t,b}\backslash\mathcal{S}_{D,t,b}$$

).

Après chaque émission d'un bloc $\mathbf{c}_{S,t}^{(b)}$, une source S ne transmet pas pendant une période de temps nécessaire pour réceptionner et décoder la voie de retour provenant de la destination indiquant un décodage correct ou pas du message de cette source.

Dès que la source S reçoit le signal $ACK_S$, elle peut arrêter selon un mode de réalisation de transmettre le message $\mathbf{u}_{S,t}$. Dit autrement, la source stoppe la transmission des blocs suivants le bloc $\mathbf{c}_{S,t}^{(b)}$ à partir duquel la destination à correctement décodé le message $\mathbf{u}_{S,t}$.

En outre, si les messages $\{u_{S_1,t},...,u_{S_M,t}\}$ des différentes sources ont tous été correctement décodés par la destination alors la source passe, selon un mode de réalisation, à l'intervalle de transmission suivant l'intervalle $t$ courant de transmission du cycle courant ou à un cycle suivant le cycle courant de transmission si l'intervalle $t$ courant est égale à $T$.

Même si les messages $\{u_{S_1,t},...,u_{S_M,t}\}$ des différentes sources n'ont pas tous été correctement décodés par la destination, la source passe, selon un mode de réalisation, à l'intervalle de transmission suivant l'intervalle $t$ courant de transmission du cycle courant de transmission si le sous-intervalle $b$ courant est égale à $B$.

Un organigramme d'une mise en œuvre par le relais $R$ du procédé de relayage est illustré par la figure 6.

Le procédé 1 comprend une étape 2 de détection et de décodage, une étape 3 de détection d'erreurs et de décision et une étape 4 de codage et de transmission vers le destinataire d'un signal représentatif des seuls messages décodés sans erreur.

L'étape 2 de détection et de décodage est mise en œuvre par le détecteur et le décodeur du DDU. Cette étape de détection et de décodage fournit une estimation des messages à partir des mots reçus jusqu'au sous-intervalle courant, $b - 1$, correspondant aux mots émis $[\mathbf{x}_{S,t}^{(1)}, \mathbf{x}_{S,t}^{(2)}, ..., \mathbf{x}_{S,t}^{(b-1)}]$ par chaque source S parmi les M sources $\{S_1,S_2,...,S_M\}$ ainsi qu'éventuellement une estimation des séquences décodées correspondant aux signaux transmis par les autres relais. L'étape 2 de détection et de décodage génère une version estimée $\hat{u}_{S_1,t}, \hat{u}_{S_2,t},...,\hat{u}_{S_M,t}$ des messages décodés des sources.

L'étape 3 de détection des messages décodés sans erreurs et de décision par le relais $R$ est mise en œuvre par le module DU. A chaque sous-intervalle courant d'un intervalle courant de transmission $t=1,...,T,$ l'étape 3 détecte les erreurs sur les messages estimés $\hat{\boldsymbol{u}}_{S_1,t}, \hat{\boldsymbol{u}}_{S_2,t}...\hat{\boldsymbol{u}}_{S_M,t}$. Selon un mode de réalisation, la détection d'erreurs est effectuée en exploitant une information de type CRC incluse dans le premier des B blocs provenant des sources. A l'issue de la détection d'erreur, il est décidé si un message estimé est décodé sans erreur ou pas. L'ensemble des messages correctement décodés par le relais au sous-intervalle courant $b - 1$ est noté $S_{R,t,b-1}$.

En l'absence de message décodé sans erreur, aucun message n'est sélectionné pour participer au codage réseau, le relais reste silencieux.

Si un ou plusieurs messages sont décodés sans erreur, l'étape 3 exploite la voie de retour pour sélectionner parmi ces messages décodés sans erreur ceux qui vont participer à l'étape 4 de codage et de transmission. Cette sélection est effectuée uniquement à partir des informations de la voie de retour. Les messages sélectionnés sont uniquement ceux qui n'ont pas encore été décodés sans erreur par la destination. L'étape 3 de détection d'erreur et de décision alimente conformément à la sélection le codage réseau après chaque bloc reçu et contrôle la transmission.

Selon un mode de réalisation, si la destination a indiqué via la voie de retour qu'elle avait décodé sans erreur tous les messages, le module DU commande au détecteur du DDU d'arrêter de traiter les signaux reçus i.e. l'étape de détection d'erreur et de décision interdit la détection et le décodage jusqu'à la fin de l'intervalle de transmission courant. Ainsi, l'étape 3 de détection d'erreur et de décision contrôle en outre l'étape 2 de détection et de décodage.

L'étape 4 de codage et de transmission vers le destinataire est mise en œuvre par le codeur et l'émetteur de l'ETU. Lors de cette étape 4 de codage et de transmission, le relais code conjointement les messages décodés sans erreur par le relais et non encore décodés correctement par la destination au sous-intervalle courant, $b - 1$, en ajoutant une redondance propre créant un code de réseau. Lors de cette étape, le relais transmet lors du sous-intervalle suivant, $b,$ un signal représentatif $\mathbf{x}_{R,t}^{(b)}$ de ces seuls messages décodés sans erreur ainsi que qu'un signal indiquant les messages sélectionnés

$$S_{R,t,b-1} \backslash S_{D,t,b-1} = S_{R,t-1} \bigcap \bar{S}_{D,t-1}.$$

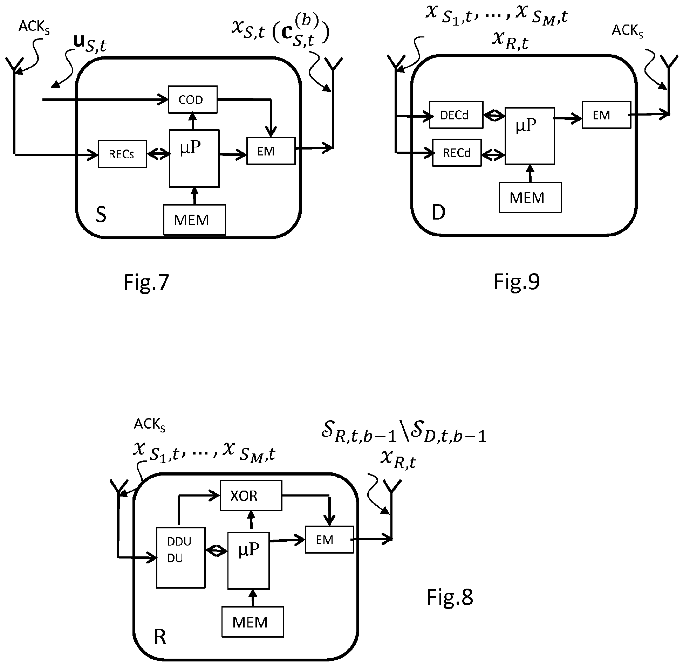

La figure 7 est un schéma d'un mode de réalisation d'une source $S$ selon l'invention pour la mise en œuvre d'un procédé de relayage selon l'invention. Le procédé de relayage est mis en œuvre par l'activation d'une application logicielle spécifique suite par exemple à l'activation d'un icône avec raccourci affiché sur l'écran de la source.

La source S comprend un codeur COD, un microprocesseur $\mu$P, une mémoire MEM, un récepteur RECs et un émetteur EM. L'application logicielle spécifique est mémorisée dans la mémoire MEM. L'exécution de cette application logicielle par le microprocesseur $\mu$P met en œuvre :

- le codage de messages $\mathbf{u}_{S,t}$ de K bits comprenant un CRC par le codeur COD en des mots de code $\mathbf{c}_{s,t}$, de type à redondance incrémentale finie pour délivrer à chaque sous intervalle de transmission $b = 1,2,...,B$ d'un intervalle courant $t$ de transmission d'un cycle courant de transmission de $T$ intervalles de transmission, T un naturel, $T > 1$, un bloc $\mathbf{c}_{S,t}^{(b)}$ tel que les B blocs successifs $\{c_{S,t}^{(b)}: 1 \leq b \leq B\}$ forment le mot de code $\mathbf{c}_{s,t}$, tel que le premier bloc peut être décodé de manière indépendante des autres blocs et tel que les blocs suivants sont des bits de parité qui ajoutent une redondance au premier bloc, avec K et $B$ des naturels, $B > 2$, $1 \leq t \leq T,$

- l'émission par l'émetteur EM des blocs d'un mot de code $\mathbf{c}_{s,t}$ pendant l'intervalle courant $t$ de transmission à destination des relais et de la destination,

- la réception par le récepteur RECs d'une voie de retour $ACK_s$ provenant de la destination indiquant un décodage correct ou pas des messages des sources,

- l'arrêt de l'émission par l'émetteur des blocs du mot de code $\mathbf{c}_{s,t}$ lorsque la voie de retour indique un décodage correcte du message $\mathbf{u}_{S,t}$ de la source $S$,

- l'interdiction de toute émission par l'émetteur pendant une période de temps nécessaire pour réceptionner et décoder la voie de retour $ACK_s$ après chaque émission par l'émetteur d'un bloc $\mathbf{c}_{S,t}^{(b)}.$

La figure 8 est un schéma d'un mode de réalisation d'un relais $R$ selon l'invention apte à coopérer avec $M$ sources $S_1,...,S_M$ et $L - 1$ relais $R_1,...,R_{L-1}$ et une destination $D$ d'un système MAMRC pour la mise en œuvre d'un procédé de relayage selon l'invention. Le procédé de relayage est mis en œuvre par l'activation d'une application logicielle spécifique suite par exemple à l'activation d'un icône avec raccourci affiché sur l'écran du relais.

Le relais *R* comprend un décodeur DDU, un module de décision DU, un microprocesseur μP, un codeur réseau XOR, une mémoire MEM et un émetteur EM. L'application logicielle spécifique est mémorisée dans la mémoire MEM. L'exécution de cette application logicielle par le microprocesseur μP met en œuvre :

- le décodage par le DDU à partir de blocs successifs reçus provenant des sources pour estimer un message par source,
- la détection d'erreurs sur les messages estimés et la décision des messages estimés sans erreur par le DU,
- le codage réseau par le XOR d'une sélection des messages décodés sans erreur pour générer un signal représentatif $x_R$,
- la transmission par l'émetteur EM vers la destination du signal représentatif $x_R$ et d'un signal de contrôle indiquant les messages sélectionnés

$$S_{R,t,b-1} \backslash S_{D,t,b-1} = S_{R,t-1} \cap \bar{S}_{D,t-1}.$$

L'exécution des codes du programme fait que le DU sélectionne les messages décodés sans erreur en entrée du XOR en prenant en compte uniquement une voie de retour $ACK_s$ provenant de la destination indiquant un décodage correct ou pas d'un ou de plusieurs messages des sources et fait que le DU interdit l'émission par l'émetteur après chaque réception par le relais d'un bloc $\left(\mathbf{c}_{S,t}^{(b)}\right)$ pendant une période de temps nécessaire pour réceptionner et décoder la voie de retour ($ACK_s$).

La figure 9 est un schéma d'un dispositif destinataire *D* selon l'invention apte à coopérer avec *M* sources $S_1,...,S_M$ et *L* relais $R_1,...,R_L$ d'un système MAMRC pour la mise en œuvre d'un procédé de relayage selon l'invention. Lors de cette coopération, le dispositif *D* met en œuvre un procédé de réception de messages. Le procédé de réception de messages est mis en œuvre par l'activation d'une application logicielle spécifique suite par exemple à l'activation d'un icône avec raccourci affiché sur l'écran du dispositif.

Le dispositif *D* comprend un récepteur RECd, un décodeur DECd, un microprocesseur μP une mémoire MEM et un émetteur EM. L'application logicielle spécifique est mémorisée dans la mémoire MEM. L'exécution de cette application logicielle par le microprocesseur μP met en œuvre :

- le décodage par le décodeur DECd des messages émis par les sources $S_1,...,S_M$ et des signaux émis par les relais pour obtenir des messages estimés et pour détecter des erreurs sur les messages estimés,
- la réception par le récepteur RECd de signaux de contrôle émis par les relais pour déterminer pour chaque relais le jeu $S_{R,t-1}$ des messages pour lesquels ce relais coopère,
- l'émission par l'émetteur EM d'un message de retour $ACK_s$ indiquant les messages estimés et décodés sans erreur par le dispositif *D*.

Les sources sont par exemples des utilisateurs qui cherchent à transmettre des messages à une destination commune qui est par exemple une station de base d'un réseau d'accès mobile. Les sources s'aident de plusieurs relais qui peuvent être des stations de base allégée et/ou par exemple une des sources dans le cas où cette dernière est sur le chemin entre les sources et la station de base. Une source peut jouer le rôle de relais par exemple sur une ressource radio qu'elle n'utilise pas pour transmettre ces propres messages. Les sources peuvent tout aussi bien être des stations de base qui s'adressent à la même destination.

Selon une utilisation particulière, les sources correspondent à des terminaux mobiles. Selon une autre utilisation, les sources peuvent correspondre à des services différents accessibles depuis un même terminal mais dans ce cas, le terminal est équipé d'au moins deux antennes qui déterminent deux canaux de propagation différents entre le terminal et les relais et entre le terminal et la destination.

## Revendications

1. Procédé (1) de relayage de messages mis en œuvre par un système de télécommunication comprenant M sources ($S_1,...,S_M$), L relais ($R_1,...,R_L$) full-duplex et une destination (*D*), M>1, L≥1, le procédé comprenant par relais et pour un cycle courant de transmission de *T* intervalles de transmission, T un naturel, *T* > 1 :

- décodage pour estimer un message par source à partir de blocs successifs reçus émis pendant un intervalle $t$ courant de transmission par une source $S \in \{S_1, S_2, ..., S_M\}$ correspondant à un mot de code $\mathbf{c}_{S,t}$ comprenant $B$ blocs $\mathbf{c}_{S,t}^{(1)}$, $\mathbf{c}_{S,t}^{(2)}$, ... $\mathbf{c}_{S,t}^{(b)}$ ..., $\mathbf{c}_{S,t}^{(B)}$ ...,dont le premier peut être décodé de manière indépendante des autres blocs, un mot de code $\mathbf{c}_{S,t}$ codant un message $\mathbf{u}_{S,t}$ de K bits, les sources émettant simultanément, avec K et $B$ des naturels, $B > 2$, $1 \leq t \leq T$,

- détection d'erreur sur les messages estimés et décision des messages source $\mathbf{u}_{S,t}$ décodés sans erreur, à chaque estimation d'un message suite à un bloc reçu d'une source,

- codage réseau d'une sélection des messages décodés sans erreur,

- transmission vers la destination ($D$) d'un signal représentatif des messages codés réseau et d'un signal de contrôle indiquant les messages sélectionnés

$$( \mathcal{S}_{R,t,b-1} \backslash \mathcal{S}_{D,t,b-1}),$$

dans lequel :

- après chaque réception d'un bloc $(\mathbf{c}_{S,t}^{(b)})$ des différentes sources $S = \{S_1, ..., S_M\}$, le relais ne transmet pas pendant une période de temps nécessaire pour réceptionner et décoder une voie de retour provenant de la destination indiquant un décodage correct ou pas d'un ou de plusieurs messages,

- le relais sélectionne les messages à coder parmi les messages décodés sans erreur par le relais en prenant en compte uniquement la voie de retour (fdb).

2. Procédé (1) de relayage selon la revendication 1, dans lequel la voie de retour consiste en des signaux de contrôle nominatifs (ACK$_s$) par source.

3. Procédé (1) de relayage selon l'une des revendications 1 et 2, comprenant par source $S$ :

- codage en un mot de code $\mathbf{c}_{s,t}$ d'un message $\mathbf{u}_{S,t}$ de K bits comprenant un CRC, le codage étant de type à redondance incrémentale finie et délivrant un bloc $\mathbf{c}_{S,t}^{(b)}$ à chaque sous-intervalle $b$ de transmission de l'intervalle $t$ courant de transmission, $1 \leq b \leq B$, tel que les $B$ blocs successifs $\mathbf{c}_{S,t}^{(1)}$, $\mathbf{c}_{S,t}^{(2)}$, ... $\mathbf{c}_{S,t}^{(b)}$ ... $\mathbf{c}_{S,t}^{(B)}$ forment le mot de code $\mathbf{c}_{s,t}$, tel que le premier bloc peut être décodé de manière indépendante des autres blocs et tel que les blocs suivants sont des bits de parité qui ajoutent une redondance au premier bloc,

- émission après modulation des blocs $\mathbf{c}_{S,t}^{(b)}$ pendant les $B$ sous-intervalles de transmission à destination du relais et de la destination.

4. Procédé (1) de relayage selon l'une des revendications 1 à 3 dans lequel après chaque émission d'un bloc $(\mathbf{c}_{S,t}^{(b)})$, une source $S$ ne transmet pas pendant une période de temps nécessaire pour réceptionner et décoder la voie de retour provenant de la destination indiquant un décodage correct ou pas d'un ou de plusieurs messages des sources et dans lequel la source stoppe l'émission des blocs si son message $\mathbf{u}_{S,t}$ est indiqué correctement décodé.

5. Procédé (1) de relayage selon la revendication 4 dans lequel la source passe à l'intervalle de transmission suivant l'intervalle t courant de transmission du cycle courant de transmission ou passe à un cycle suivant le cycle courant de transmission si l'intervalle $t$ courant est égale à $T$ ou si tous les messages ont été correctement décodés par la destination.

6. Procédé (1) de relayage selon l'une des revendications 1 à 5, dans lequel l'accès au canal de transmission entre les L relais et la destination est selon un schéma d'accès multiple non orthogonal.

7. Relais (R) full-duplex destiné à un système de télécommunication comprenant M sources ($S_1, ..., S_M$), L relais ($R_1, ..., R_L$) et une destination ($D$), M>1, L≥1, pour un cycle courant de transmission de $T$ intervalles de transmission, T un naturel, $T > 1$, comprenant :

- un décodeur (DDU) pour estimer un message par source, à partir de blocs successifs reçus émis pendant un intervalle $t$ courant de transmission par une source $S \in S_2, ...,S_M\}$ correspondant à un mot de code $\mathbf{c}_{S,t}$ comprenant $B$ blocs $\mathbf{c}_{S,t}^{(1)}, \mathbf{c}_{S,t}^{(2)}, ... \mathbf{c}_{S,t}^{(b)} ..., \mathbf{c}_{S,t}^{(B)}$ dont le premier peut être décodé de manière indépendante des autres blocs, un mot de code $\mathbf{c}_{S,t}$ codant un message $\mathbf{u}_{S,t}$ de K bits, les sources émettant simultanément, avec K et $B$ des naturels, $B > 2$, $1 \leq t \leq T$,

- un module de décision (DU) pour décider des messages source $\mathbf{u}_{S,t}$ décodés sans erreur à partir des messages estimés, à chaque estimation d'un message suite à un bloc reçu,

- un codeur réseau (ETU) d'une sélection des messages décodés sans erreur et

- un émetteur (ETU) d'un signal représentatif des messages codés réseau vers la destination et d'un signal de contrôle indiquant les messages sélectionnés ($S_{R,t-1}, S_{R,t-1} \cap \overline{S}_{D,t-1}$),

dans lequel :

- le module de décision (DU) sélectionne les messages décodés sans erreur en entrée du codeur réseau (ETU) en prenant en compte uniquement une voie de retour (fdb) provenant de la destination indiquant un décodage correct ou pas d'un ou plusieurs messages des sources,

et le module de décision (DU) interdit après chaque réception par le relais d'un bloc $(\mathbf{c}_{S,t}^{(b)})$ l'émission par l'émetteur pendant une période de temps nécessaire pour réceptionner et décoder la voie de retour (fdb).

## Patentansprüche

1. Verfahren (1) zur Weiterleitung von Nachrichten, das von einem Telekommunikationssystem durchgeführt wird, das M Quellen ($S_1$ ..., $S_M$), L Vollduplex-Relais ($R_1$ ..., $R_L$) und ein Ziel (D) enthält, M>1, L≥1, wobei das Verfahren pro Relais und für einen laufenden Übertragungszyklus von T Übertragungsintervallen, mit T einer natürlichen Zahl, T > 1, enthält:

- Decodierung, um eine Nachricht pro Quelle ausgehend von empfangenen aufeinanderfolgenden Blöcken zu schätzen, die während eines laufenden Übertragungsintervalls t von einer Quelle $S \in S_1, S_2,...,S_M\}$ entsprechend einem Codewort $\mathbf{c}_{S,t}$ gesendet werden, das B Blöcke $c_{S,t}^{(1)}, c_{S,t}^{(2)}, ... c_{S,t}^{(b)}, ... c_{S,t}^{(B)}$ enthält, von denen der erste unabhängig von den anderen Blöcken decodiert werden kann, wobei ein Codewort $\mathbf{c}_{S,t}$ eine Nachricht $u_{S,t}$ von K Bits codiert, wobei die Quellen gleichzeitig senden, mit K und B natürlichen Zahlen, B > 2, $1 \leq t \leq T$,

- Fehlererfassung in den geschätzten Nachrichten und Entscheidung der fehlerfrei decodierten Quellennachrichten $u_{S,t}$ bei jeder Schätzung einer Nachricht nach einem von einer Quelle empfangenen Block,

- Netzcodierung einer Auswahl der fehlerfrei decodierten Nachrichten,

- Übertragung an das Ziel (D) eines für die codierten Netznachrichten repräsentativen Signals und eines Steuersignals, das die ausgewählten Nachrichten ($\delta_{R,t,b-1}/\delta_{D,t,b-1}$), anzeigt,

wobei:

- nach jedem Empfang eines Blocks $c_{S,t}^{(b)}$ von den verschiedenen Quellen S = {$S_1$, ..., $S_M$} das Relais während einer Zeitspanne nicht überträgt, die notwendig ist, um eine vom Ziel kommenden Rückleitung anzunehmen und zu decodieren, die eine korrekte oder nicht korrekte Decodierung einer oder mehrerer Nachrichten anzeigt,

- das Relais die zu codierenden Nachrichten unter den vom Relais fehlerfrei decodierten Nachrichten auswählt, indem es nur die Rückleitung (fdb) berücksichtigt.

2. Weiterleitungsverfahren (1) nach Anspruch 1, wobei die Rückleitung aus nominativen Steuersignalen (ACK$_s$) pro Quelle besteht.

3. Weiterleitungsverfahren (1) nach einem der Ansprüche 1 und 2, das pro Quelle S enthält:

- Codierung in einem Codewort $\mathbf{c}_{S,t}$ einer Nachricht $u_{S,t}$ von K Bits, die ein CRC enthält, wobei die Codierung von der Art mit endlicher inkrementeller Redundanz ist und einen Block $c_{S,t}^{(b)}$ in jedem Übertragungs-Teilintervall b des laufenden Übertragungsintervalls t liefert, $1 \leq b \leq B$, derart, dass die aufeinanderfolgenden B Blöcke $c_{S,t}^{(1)}$, $c_{S,t}^{(2)}$, ... $c_{S,t}^{(b)}$, ... $c_{S,t}^{(B)}$ das Codewort $\mathbf{c}_{S,t}$ formen, derart, dass der erste Block unabhängig von den anderen Blöcken decodiert werden kann, und derart, dass die folgenden Blöcke Paritätsbits sind, die zum ersten Block eine Redundanz hinzufügen,

- Senden nach Modulation der Blöcke $c_{S,t}^{(b)}$ während der B Übertragungs-Teilintervalle an das Relais und an das Ziel.

**4.** Weiterleitungsverfahren (1) nach einem der Ansprüche 1 bis 3, wobei nach jedem Senden eines Blocks $c_{S,t}^{(b)}$ eine Quelle S während einer Zeitspanne nicht überträgt, die notwendig ist, um die von dem Ziel kommende Rückleitung anzunehmen und zu decodieren, die eine korrekte oder nicht korrekte Decodierung einer oder mehrerer Nachrichten der Quellen anzeigt, und wobei die Quelle das Senden der Blöcke stoppt, wenn ihre Nachricht $u_{S,t}$ als korrekt decodiert angezeigt wird.

**5.** Weiterleitungsverfahren (1) nach Anspruch 4, wobei die Quelle zum auf das laufende Übertragungsintervall t des laufenden Übertragungszyklus folgende Übertragungsintervall übergeht oder zu einem auf den laufenden Übertragungszyklus folgenden Zyklus übergeht, wenn das laufende Intervall t gleich T ist oder wenn alle Nachrichten korrekt vom Ziel decodiert wurden.

**6.** Weiterleitungsverfahren (1) nach einem der Ansprüche 1 bis 5, wobei der Zugang zum Übertragungskanal zwischen den L Relais und dem Ziel gemäß einem nicht orthogonalen Mehrfachzugangsschema ist.

**7.** Vollduplex-Relais (R), das für ein Telekommunikationssystem bestimmt ist, das M Quellen ($S_1$, ..., $S_M$), L Relais ($R_1$, ..., $R_L$) und ein Ziel (D) enthält, $M > 1$, $L \geq 1$, für einen laufenden Übertragungszyklus von T Übertragungsintervallen enthält, mit T einer natürlichen Zahl, $T > 1$, das enthält:

- einen Decodierer (DDU), um eine Nachricht pro Quelle ausgehend von empfangenen aufeinanderfolgenden Blöcken zu schätzen, die während eines laufenden Übertragungsintervalls t von einer Quelle $S \in \{S_1, S_2, ..., S_M\}$ entsprechend einem Codewort $\mathbf{c}_{S,t}$ gesendet werden, das B Blöcke $c_{S,t}^{(1)}$, $c_{S,t}^{(2)}$, ... $c_{S,t}^{(b)}$, ... $c_{S,t}^{(B)}$ enthält, von denen der erste unabhängig von den anderen Blöcken decodiert werden kann, wobei ein Codewort $\mathbf{c}_{S,t}$ eine Nachricht $u_{S,t}$ von K Bits codiert, wobei die Quellen gleichzeitig senden, mit K und B natürlichen Zahlen, $B > 2, 1 \leq t \leq T$,
- ein Entscheidungsmodul (DU), um fehlerfrei decodierte Quellennachrichten $u_{S,t}$ ausgehend von den geschätzten Nachrichten bei jeder Schätzung einer Nachricht nach einem empfangenen Block zu entscheiden,
- einen Netzcodierer (ETU) einer Auswahl der fehlerfrei decodierten Nachrichten, und
- einen Sender (ETU) eines für die codierten Netznachrichten repräsentativen Signals an das Ziel und eines Steuersignals, das die ausgewählten Nachrichten ($S_{R,t-1}, S_{R,t-1} \cap \overline{S}_{D,t-1}$) anzeigt,

wobei:

das Entscheidungsmodul (DU) die fehlerfrei decodierten Nachrichten am Eingang des Netzcodierers (ETU) auswählt, indem es nur eine vom Ziel kommenden Rückleitung (fdb) berücksichtigt, die eine korrekte oder nicht korrekte Decodierung einer oder mehrerer Nachrichten der Quellen anzeigt,

und das Entscheidungsmodul (DU) nach jedem Empfang eines Blocks $c_{S,t}^{(b)}$ durch das Relais das Senden durch den Sender während einer Zeitspanne verbietet, die notwendig ist, um die Rückleitung (fdb) anzunehmen und zu decodieren.

**Claims**

1. Method (1) for relaying messages that is implemented by a telecommunication system comprising M sources ($S_1$, ..., $S_M$), L full-duplex relays ($R_1$, ..., $R_L$) and a destination (D), M>1, L≥1, the method comprising per relay and for a current transmission cycle of T transmission intervals, T being a natural number, T>1:

   - decoding so as to estimate a message per source, on the basis of successive received blocks transmitted during a current transmission interval $t$ by a source $S \in \{S_1, S_2, ..., S_M\}$, corresponding to a code word $\mathbf{c}_{S,t}$ comprising B blocks $\mathbf{c}_{S,t}^{(1)}$, $\mathbf{c}_{S,t}^{(2)}$, ... $\mathbf{c}_{S,t}^{(b)}$ ..., $\mathbf{c}_{S,t}^{(B)}$, the first of which can be decoded independently of the other blocks, a code word $\mathbf{c}_{S,t}$ coding a K-bit message $\mathbf{u}_{S,t}$, the sources transmitting simultaneously, with K and B being natural numbers, B>2, 1≤t≤T,
   - performing error detection on the estimated messages and deciding on the source messages $\mathbf{u}_{S,t}$ decoded without error, upon each estimation of a message subsequent to a block received from a source,
   - performing network coding of a selection of the messages decoded without error,
   - transmitting to the destination (D) a signal representative of the network-coded messages and a control signal indicating the selected messages ($S_{R,t,b-1} \backslash S_{D,t,b-1}$),

   wherein:

   - after each reception of a block $(\mathbf{c}_{S,t}^{(b)})$ from the various sources $S = \{S_1, ..., S_M\}$, the relay does not transmit during a time period required for receiving and decoding feedback originating from the destination indicating correct or incorrect decoding of one or more messages,
   - the relay selects the messages to be coded from among the messages decoded without error by the relay by taking only the feedback (fdb) into account.

2. Relaying method (1) according to Claim 1, wherein the feedback consists of source-nominating control signals (ACKs).

3. Relaying method (1) according to one of Claims 1 and 2, comprising per source $S$:

   - coding a K-bit message $\mathbf{u}_{S,t}$ comprising a CRC into a code word $\mathbf{c}_{S,t}$, the coding being of finite incremental redundancy type and delivering a block $\mathbf{c}_{S,t}^{(b)}$ at each transmission sub-interval $b$ of the current transmission interval $t$, 1≤b≤B, such that the B successive blocks $\mathbf{c}_{S,t}^{(1)}$, $\mathbf{c}_{S,t}^{(2)}$, ... $\mathbf{c}_{S,t}^{(b)}$ ..., $\mathbf{c}_{S,t}^{(B)}$ form the code word $\mathbf{c}_{S,t}$, such that the first block can be decoded independently of the other blocks and such that the subsequent blocks are parity bits which add redundancy to the first block,
   - transmitting the blocks $\mathbf{c}_{S,t}^{(b)}$ after modulation to the relay and the destination during the B transmission sub-intervals.

4. Relaying method (1) according to one of Claims 1 to 3, wherein after each transmission of a block $(\mathbf{c}_{S,t}^{(b)})$, a source $S$ does not transmit during a time period required for receiving and decoding the feedback originating from the destination and indicating correct or incorrect decoding of one or more messages from the sources, and wherein the source halts the transmission of the blocks if its message $\mathbf{u}_{S,t}$ is indicated to be correctly decoded.

5. Relaying method (1) according to Claim 4, wherein the source passes to the transmission interval following the current transmission interval $t$ of the current transmission cycle or passes to a cycle following the current transmission cycle if the current interval $t$ is equal to $T$ or if all the messages have been correctly decoded by the destination.

6. Relaying method (1) according to one of Claims 1 to 5, wherein access to the transmission channel between the L relays and the destination is in accordance with a non-orthogonal multiple access scheme.

7. Full-duplex relay (R) intended for a telecommunication system comprising M sources ($S_1$, ..., $S_M$), L relays ($R_1$, ...,

$R_L$) and a destination ($D$), M>1, L≥1, for a current transmission cycle of $T$ transmission intervals, T being a natural number, $T$>1, comprising:

- a decoder (DDU) for estimating a message per source, on the basis of successive received blocks transmitted during a current transmission interval $t$ by a source $S \in \{S_1, S_2, ..., S_M\}$, corresponding to a code word $\mathbf{c}_{S,t}$ comprising B blocks $\mathbf{c}_{S,t}^{(1)}$, $\mathbf{c}_{S,t}^{(2)}$, ... $\mathbf{c}_{S,t}^{(b)}$ ..., $\mathbf{c}_{S,t}^{(B)}$, the first of which can be decoded independently of the other blocks, a code word $\mathbf{c}_{S,t}$ coding a K-bit message $\mathbf{u}_{S,t}$, the sources transmitting simultaneously, with K and $B$ being natural numbers, $B$>2, 1≤$t$≤$T$,

- a decision module (DU) for deciding on the source messages $\mathbf{u}_{S,t}$ decoded without error on the basis of the estimated messages, upon each estimation of a message subsequent to a received block,

- a network coder (ETU) for coding a selection of the messages decoded without error, and

- a transmitter (ETU) for transmitting a signal representative of the network-coded messages to the destination and for transmitting a control signal indicating the selected messages ($S_{R,t-1}$, $S_{R,t-1} \cap \overline{S}_{D,t-1}$),

wherein:

- the decision module (DU) selects the messages decoded without error as input of the network coder (ETU) by taking into account only feedback (fdb) originating from the destination indicating correct or incorrect decoding of one or more messages from the sources,

and after each reception of a block $(\mathbf{c}_{S,t}^{(b)})$ by the relay, the decision module (DU) prohibits the transmitter from transmitting during a time period required for receiving and decoding the feedback (fdb) .

Fig.1

Fig.2

Fig.3

Fig.4

| sub slot 1 | fdb | sub slot 2 | fdb | .... | sub slot B |
|---|---|---|---|---|---|

Fig.5

$$\mathbf{x}_{S_i,t}^{(b-1)},$$
$$S \in \{S_1, S_2, \ldots, S_M\}$$

Fig.6

$$\{\widehat{\mathbf{u}}_{S_1,t}, \widehat{\mathbf{u}}_{S_2,t}, \ldots, \widehat{\mathbf{u}}_{S_M,t}\} \quad 2$$

CRC ?  N

Y  3

$$\mathcal{S}_{R,t,b-1}$$

$$\mathcal{S}_{R,t,b-1} \backslash \mathcal{S}_{D,t,b-1}$$  ACK$_S$

1

XOR  4

$$\mathbf{x}_{R,t}^{(b)} \quad \mathcal{S}_{R,t,b-1} \backslash \mathcal{S}_{D,t,b-1}$$

Fig.7

Fig.9

Fig.8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006291440 A
- WO 2015197990 A

- WO 2015197991 A

**Littérature non-brevet citée dans la description**

- **HENRI DUBOIS-FERRIÈRE et al.** Packet combining in sensor networks. *Proc. of the 3rd international conference on embedded networked sensor systems, SENSYS 05,* 01 Janvier 2005, 102